## Europäisches Patentamt
## European Patent Office
## Office européen des brevets

(11) Publication number: **0 038 114**
**B1**

(12) **EUROPEAN PATENT SPECIFICATION**

(45) Date of publication of patent specification: **07.08.85**

(51) Int. Cl.⁴: **B 65 D 30/22,** B 65 D 81/34, B 31 B 39/00

(21) Application number: **81300644.2**

(22) Date of filing: **17.02.81**

(54) Process for forming a thermoplastic bag.

(30) Priority: 28.07.80 US 172922
11.04.80 US 139363

(43) Date of publication of application:
**21.10.81 Bulletin 81/42**

(45) Publication of the grant of the patent:
**07.08.85 Bulletin 85/32**

(84) Designated Contracting States:
**BE CH DE FR IT LI NL**

(56) References cited:
**DE-A-2 842 954**
**GB-A-1 466 379**
**US-A-3 403 716**
**US-A-3 851 574**
**US-A-3 873 735**

(73) Proprietor: **THE DOW CHEMICAL COMPANY**
**Dow Center 2030 Abbott Road Post Office Box 1967**
**Midland Michigan 48640 (US)**

(72) Inventor: **Stevenson, Fred**
**2658 Blades**
**Beaverton Michigan 48612 (US)**

(74) Representative: **Allard, Susan Joyce et al**
**BOULT, WADE & TENNANT 27 Furnival Street**
**London EC4A 1PQ (GB)**

Courier Press, Leamington Spa, England.

EP 0 038 114 B1

## Description

The present invention resides in a process for forming a bag from a thermoplastic film material. The bag is comprised of two wing sections with a central neck portion (or filling spout). The wing sections are the product containment sections of the bag. The neck portion, in addition to being usable for filling and emptying the container, provides an exhaust opening to allow the venting of gas and steam from the container during cooking if the bag is used as a cook-in-bag pouch. Various closures may be utilized to close the fill spout such as an integral, reclosable, zipper-type fastener element.

With the advent of microwave ovens and the frequent cooking in such ovens of foods taken directly from a freezer, it is desirable to have a thermoplastic container which can be completely stored in a freezer but which can also be used directly in a microwave oven. Rigid containers which stand upright are not always of the most compact shape for storage in the freezer, often take up unnecessary room when not fully filled, and customarily require lid removal to allow venting during cooking. Thermoplastic storage and cooking bags which can be laid on their sides have the disadvantage that when opened for venting during cooking, spillage of product in the oven can result.

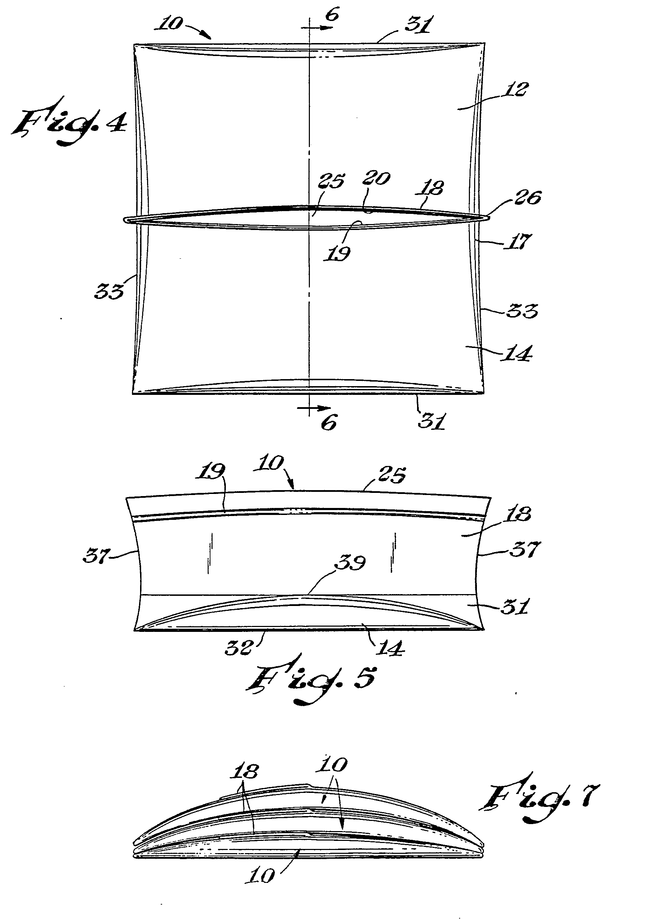

Since the introduction of microwave cooking, it has been desirable to have a compact plastic pouch which can stand upright sufficiently to avoid spillage, yet remain flexible enough so that the storage space beyond that of the product contained therein is essentially not required to be utilized in the freezer compartment. Compact freezing bags with a top opening are illustrated by U.S. Patent No. 3,389,783, for example, but these have not been designed for venting or microwave cooking and are merely a flat, pillow-type package. Stand-up bags, such as typically illustrated in U.S. Patent No. 3,799,914 or 3,380,646, are designed to contain food in their upright sections, which make the bags more readily upsettable if they were to be used in a microwave oven for cooking. Other packages designed to give wider bottoms for packaging, such as shown in U.S. Patent No. 3,003,681, still are intended to contain the bulk of the product in the upright portion of the container, which does not make for most efficient stacking or cooking. A gussetted bag is disclosed in U.S. Patent No. 3,851,574. The product contained therein fills the central and gusset portions of the bag and on cooking expands to fill the bag. The gusset portions permit expansion of the volume of the bag. Bags of this type are customarily laid on their sides when the product is being cooked, as shown in Figure 4 thereof. U.K. Patent Specification No. 2,016,400 discloses a package for use in containing moisture containing refreshers or moisture containing material which package is formed of a sheet material which embraces the moist material and defines a resealable flap extending from the package to define the package opening. The package is initially hermetically sealed. The specification does not disclose or suggest that these bags could be used to contain a food product. The above containers have advantageous features which represent the state of the art prior to the present invention but which fail to include the improvements necessary to have a superior freezer to microwave oven bag which is compact, yet non-spillable in a cooking environment.

According to the present invention there is provided a process for forming a flexible thermoplastic film bag having a base portion and a central neck portion extending upwardly from the base portion, the neck portion having an internal channel in open communication with the base portion and providing access to the base portion when the bag is opened, the base portion comprising a pair of opposed wing sections and the neck portion being smaller than each of the wing sections, the bag walls being formed from an inner skin and an outer skin, the outer skin having a higher heat-softening temperature, the process being characterised by the steps of providing thermoplastic film material for the bag having inner and outer skins of different heat-softening temperature responses, selecting the inner skin so as to have a significantly lower heat-softening temperature than the outer skin, laying two plies of the film against one another so that inner skin abuts against itself and forms opposite sides and a bottom, gussetting the bottom of the film to the extent that the gussetted bottom forms the major portion of the bag, applying heat along the opposite margins of the sides at a temperature above the softening temperature of the inner skin but below that of the outer skin, whereby sealing of the inner skin along the margins occurs without sealing of the adjoining outer skin along the gussetted bottom of the bag, forming wing sections from the gussetted bottom immediately adjacent and below the neck portion with the opposed wing sections being joined at their margins only where they join the base of the neck portion so that the bottom of the bag formed by the opposed wing sections lies essentially flat when in use and the non-gussetted section forms a central neck portion in open communication with the wing sections.

By forming the bag with a gusset and sealing at the lower melt temperature range, wings are formed because the outer skin layers of the gusset do not seal to one another.

Included within the scope of the invention are bags prepared by the process of the invention and food packages comprising such bags having a food product therein.

When a reclosable, zipper-type fastener or other closure means is contained in the neck portion of the bag, the closure may be designed to be sensitive to increases in vapour pressure within the bag so that the engaging elements of the fastener can automatically open to vent a package comprising the bag with food therein upon build-up of pressure during cooking. If the package is not opened prior to cooking, this automatic-venting feature acts as a safety feature against the bursting of the package due to increase in vapour pressure during cooking.

The engaging elements of the zipper-type fastener can be integrated into the neck portion of the bag by forming them from the inner layer of the thermoplastic material of the bag or by coextruding a thermoplastic material formed into fastener elements onto the bag material. By forming the engaging elements of the fastener from a thermoplastic material having a softening temperature sensitive to heat normally involved with cooking food products, as may be experienced in microwave cooking, for example, the above-mentioned automatic-venting feature may be enhanced. Upon softening during cooking, the engaging elements of the fastener become more flexible, but do not melt, thereby aiding in the automatic opening of the package upon pressure build-up within the package.

By having the wings comprise the substantial pouch part of the bag, their lay-flat characteristics permit ready stacking of the containers in a freezer compartment with the unfilled spout portion being laid over on one of the wings during storage. The bags can then be transferred directly from the freezer to a microwave oven for cooking, the spout being erected so that cooking can take place without spillage.

Containers for food products are commonly flat bags which lies on their sides, stand-up bags which are subject to tipping over, or rigid containers which lack flexibility and take up excess room. By this invention, a bag is formed which stands up without tipping and can be stacked one upon another when filled, compactly stored when empty and has a neck which serves as a handle as well as a filling and venting spout when required to serve such functions. The bag of this invention has particular use in freezer storage to microwave cooking applications. In a freezer storage compartment, the neck portion of a filled bag can be folded over for stacking of a plurality of bags upon one another into a flat layered configuration. When used for cooking, a product contained in the bag can be spread out into a thinner, flatter block for more rapid, uniform heating. The neck of the bag is adapted to serve as a splatter shield when the neck portion is opened for venting.

Our copending European patent application No. 84102910.1 as filed claims, in one aspect, a package for use as a cold storage and cooking utensil, comprising a flexible thermoplastic bag having a central neck portion and two wing sections which extend from opposite sides of the neck portion, the neck portion forming an internal channel to provide communication between the wing sections and the outside of the bag, and a food product contained substantially entirely in the wing sections of the bag, the only exit for the product being through the neck portion, whereby spilling of the food product from the bag is avoided during heating.

In our above mentioned copending patent application, in another aspect, there is also claimed a microwave-compatible flexible bag of thermoplastic film material having a central neck portion and two wing sections which extend from opposite sides of the neck portion, the neck portion forming an internal channel to provide the only communication between the wing sections and the outside of the bag and being smaller than each of the wing sections.

In order that the invention may be better understood, reference is made to the accompanying drawings in which:

Figure 1 is an isometric view of a bag constructed according to the principles of the present invention, with wing sections of the bag shown in the process of being opened in dotted lines in preparation for receiving product to be contained therein;

Figure 2 is a fragmentary enlarged cross-sectional view of the multilayered structure of the bag taken along Reference Line 2—2 of Figure 1;

Figure 3 is an end view of the bag of Figure 1 showing pillow-shaped wing sections containing a product therein and the upright spout portion which is used for filling the container and venting the container during cooking;

Figure 4 is a plan view of the filled bag of Figure 3 with the spout being opened;

Figure 5 is a side view of the filled bag of Figure 3 with the spout being opened;

Figure 6 is a cross-sectional view of the filled bag taken along Reference Line 6—6 of Figure 4; and

Figure 7 is an end view of a stack of filled bags of Figure 3 only with their spout portions bent over as they might be arranged in a freezer.

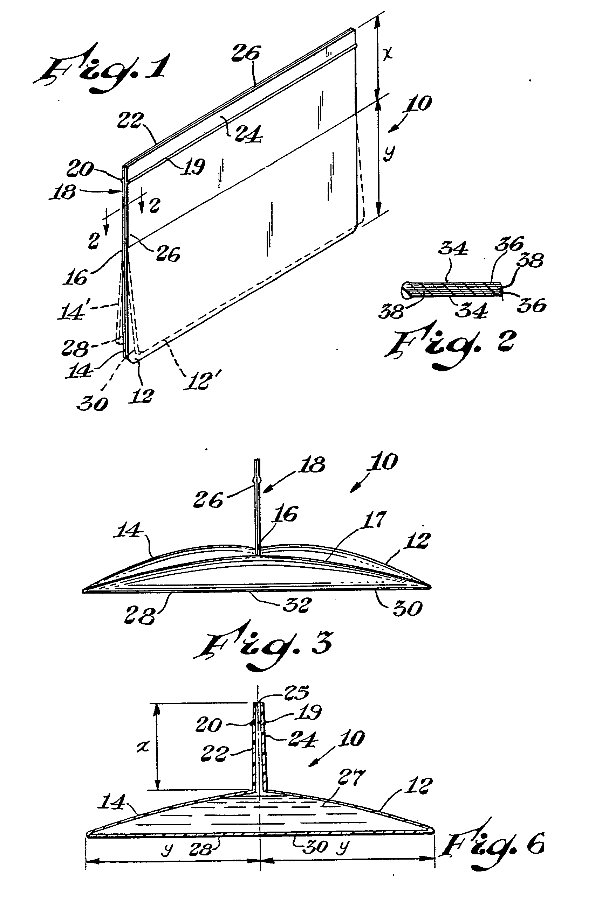

More specifically, there is shown in Figure 1 a disposable storage and cooking bag 10 preferably formed of a transparent or opaque synthetic resinous thermoplastic film material or materials to be later described. Bag 10 comprises wing sections or pouches 12 and 14 shown in a closed position in solid lines and shown in a slightly open position shown in dotted lines 12' and 14'. Extending upwardly from a juncture 16 of the wings 12 and 14 is a neck or spout section 18. Side panels 22 and 24 are separable along an edge 26 except at their lateral extremities where they are sealed to each other to close the sides of the spout 18.

The spout section 18 contains a closure means comprised of male and female fastener elements 19 and 20, respectively. The dimensions and/or shapes of the fastener elements 19 and 20 determine the magnitude of resistance offered against their separation by pressure exerted from within the bag. Accordingly, it is preferred, but not essential to the invention, that fastener elements 19 and 20 be designed such that when the vapor pressure within the bag increases due to cooking of a product such as food or a liquid in a frozen or non-frozen condition, the fastener opens to permit venting of vapors through channel 25 as shown in Figure 6. This automatic-venting feature acts as a safety precaution against the bursting of the bag due to pressure build-up during cooking. If the fastener elements 19 and 20 are not designed to separate during cooking, the fastener elements should be opened prior to cooking. The designing of appropriate fastener elements is well known in the art and disclosed, for example, in U.S. Patent No. 3,338,285 and U.S. Patent No. 3,198,228.

Various methods may be employed to incorporate the fastener elements in the spout section 18. For example, the elements 19 and 20 can be formed from the thermoplastic material of the inner layer of each of side panels 22 and 24.

In Figure 2, the plies or layers of the multilayered bag material are depicted in cross-section as they face one another in the spout section 18 (which contains the fastening means) and comprise, for example, outer skin layers 34 which are held to inner skin layers 38 by glue layers 36, with the inner skin layer 38 of each side panel 22 and 24 facing each other. Elements 19 and 20 are preferably formed upon the inner skin layers 38.

Preferably, inner skin layer 38, from which the fastener elements 19 and 20 are formed, is formed of a thermoplastic material that is heat softenable at temperatures common to the cooking of the product contained in the bag. For example, inner layer 38 can be formed of a high or low density polyethylene resin having a melt temperature of about 107° to 137°C. Of course, the thermoplastic material must be non-meltable at such cooking temperatures when food is to be cooked in the bag. When the fastener elements 19 and 20 are formed from material that is heat softenable at cooking temperatures, the automatic-venting feature described above can be enhanced. As the thermoplastic material softens at cooking temperatures, the fastener elements become more flexible and thereby open more easily to vent the bag upon pressure build-up within the bag.

A second exemplary method of incorporating elements 19 and 20 in the spout section 18 is by coextruding a thermoplastic material forming the fastener elements onto the thermoplastic material forming side panels 22 and 24. Again, it is preferred that the fastener elements 19 and 20 be formed from thermoplastic material that is heat softenable at cooking temperatures so as to aid in the opening of the closure to permit automatic venting of the bag 10. For example, the fastener elements 19 and 20 can be formed from a low density polyethylene resin having a melt temperature of about 107°C to 137°C that is coextruded onto a high density polyethylene material that forms the inner layer of side panels 22 and 24.

Figure 3 shows the end of bag 10 when filled illustrating the slight end bulge 17 which is lower than wing sections 12 and 14 because the ends are confined by the seal at joint 16.

Figure 4 is a top view of the bag 10 illustrating that the bag is basically square, such as 8 inches by 8 inches (20.32 cm by 20.32 cm) on its sides 31 and ends 33 for a typical example. The spout 18 is in an open position exposing filling and venting channel 25.

Figure 5 is a view looking at one side 31 of bag 10 illustrating that as the wing sections 12, 14 are filled the spout 18 tips at its ends 37. If the neck is of insufficient height, that is, if it is only slightly above, at, or below the crest 39 of the wing section 14 when filled, leakage or splatter from channel 25 of spout 18 would occur. Likewise, if too tall, spout 18 may fall or fold over due to its own weight and would also take too much material. It has been found that for an 8 inch by 8 inch (20.32 cm by 20.32 cm) bag with closure means contained in the spout, as viewed in Figure 4, a spout height of from 1 to 3 inches (2.54 cm to 7.62 cm) is practical and about 2 inches (5.08 cm) is preferred. By having a practical height for spout 18, the need for placing the bag in a dish to avoid spillage, as with prior art bags, is obviated.

In its filled form, food or other product 27 contained in the bag 10 occupies an area located in each of the wing sections 12 and 14, as illustrated in Figure 6. When the bag 10 is fully opened out, as illustrated in Figure 3, the wing sections 12 and 14 lie longitudinally on a flat surface. They are formed by the surfaces 28 and 30 joining together to form a bottom 32 for the bag which is adaptable for laying on any substantially flat surface. The surfaces 28 and 30 do not stick together during the subsequent edge sealing operation because the surfaces are formed of materials which do not stick together or seal at the temperatures at which the rest of the bag seals.

Figure 2 more clearly illustrates a preferred embodiment in which the outer skin layer 34, the glue layer 36 and the inner skin layer 38 of each ply face one another in the spout portion 18. The inner skin layers 38 can be formed, for example, of a low melt temperature olefinic, polymeric material while the outer skin layers 34 can be formed of a polyester or a nylon-type polyamide thermoplastic material having melt temperatures substantially in excess of that of the inner skin layer materials. The inner skin layers 38, if formed of a low or high density polyethylene resin, would have a melt temperature of about 107°C to 137°C, respectively. High density polyethylene, having a density of about 0.95 gm/cm$^3$ and above, is advantageously employed, as generally its melt temperature is above the boiling point of water and will not become tacky during cooking. However, low density polyethylene (about 0.89 to 0.93 gm/cm$^3$) and polypropylene can also be employed. The outer skin layers 34, if formed of a typical nylon, such as Nylon 6 resin of Allied Chemical Company, would have a melt temperature of about 215°C or of a typical polyester, such as polyethylene terephthalate, of about 250°C. The glue layers 36 can be an ionomer copolymer such as duPont Surlyn® resin, or Chemplex Plexar modified polyolefin, or an ethylene-acrylic acid copolymer. The inner skin layers 38 could be 1.5 mils thick, the outer skin layers 34, 0.4 mils thick and the glue layer 36, 0.3 mils thick, if desired. As a further example, for bags having a wall thickness from about 1½ to 4 mils, suitable for most applications, the inner layer could comprise 50—80% of the total thickness, the glue layer 10—20%, and the outer layer 10—40%, if desired. Typical values are 68%, 14% and 18%, respectively. The multilayered film can be coextruded by a process such as taught in U.S. Patent Nos. 3,354,506 or 3,557,265, for example.

The process for forming the bag 10 is to form it from thermoplastic film material having an inner skin layer 38 and an outer skin layer 34 with inner skin layer 38 having a significantly lower heat-softening temperature than outer skin layer 34. Two plies of the thermoplastic material are layed against one another so that the inner skin layer 38 abuts against itself to form opposite sides. Surfaces 28 and 30, which are part of outer skin layers 34, are joined together to form the bottom 32 for the bag. The bottom 32 is then gussetted so that surfaces 28 and 30 face one another. Heat is applied along the opposite margins of the sides of the bag by a hot bar or other sealing element at a temperature above the softening temperature of inner skin layer 38 but below that of the outer skin layer 34. At this temperature, sealing of the inner skin layers 38 occurs while surfaces 28 and 30, being part of outer skin layers 34, fail to seal or join together. Thus, a bag 10 having wing-shaped pouches 12 and 14 is formed by the gussetted section with the non-gussetted section forming the central neck portion 18 for the bag that is in open communication with the wing sections 12 and 14.

Upon disengaging fastener elements 19 and 20, the spout 18 can be opened by separating side panels 22 and 24 to form a feed channel 25 for introducing a product such as food or liquid 27 into each of the wing sections 12 and 14. A sufficient quantity of the product is introduced so as to fill the wing sections 12 and 14 without any significant amount of the product being contained in the spout or neck portion 18.

The spout 18 is shown lying in a folded-over position in Figure 7. This permits easy stacking of the filled containers 10 when it is desired to freeze the product 27 with a plurality of other like containers 10 and for storing the stacked containers in a freezer until desired for cooking, such as illustrated in Figure 7. Since the spout can be folded over, one bag can be positioned directly on top of another bag with the wing sections of one bag resting on the wing sections of the next lower bag.

It has been found that the width of each wing section 12 or 14 should be more than one-half of the total height of the bag when in a disposition as shown in full lines in Figure 1. In one typical embodiment, distance Y, the width of surface 28 or surface 30 of wing sections 12 or 14 would be about 4 to 5 inches long (10.16 cm to 12.70 cm), while the height X of the spout or neck portion would be about 2 inches (5.08 cm) as shown in Figures 1 and 6. With such an arrangement, the bulk of the container is formed of the wing sections, while the neck or filling spout 18 constitutes a minor portion of the bag. The bag does not therefore become a stand-up bag. It is, in effect, a lay-flat bag, but one which is not spillable because of the upstanding neck portion, and due to the fact that there is no substantial product intended to be contained in the neck portion.

Various types of closure (not illustrated herein) may be utilized in the practice of the invention in order to close the filling spout of the bag as will be readily apparent to persons skilled in the art. When the spout is not secured too tightly by a closure, venting of gas and steam from within the bag is provided while the substantial closing of the spout aids in keeping the spout erect to prevent spillage of the product from within the bag.

Applicable closures (in addition to the integral zipper-type fastener described above and depicted in the drawings) include, but are not limited to, plastic clips such as those disclosed in U.S. Patent Nos. 3,370,396; 3,334,805 and 2,981,990; omega shaped plastic fasteners such as those disclosed in U.S. Patent No. 3,535,746; plastic tie straps such as those disclosed in U.S. Patent Nos. 3,633,247; 3,874,034; 3,972,469 and 3,973,610; detachable tie straps such as those disclosed in U.S. Patent Nos. 3,779,139; 3,865,303; 3,052,399 and 3,974,960; and closures using the dead fold characteristics of metal (e.g., twist-ties) such as those disclosed in U.S. Patent Nos. 3,417,863; 3,481,461 and 3,565,738. Rubber bands, string, adhesive tape and adhesives are further examples of closure means that may be employed to close the filling spout of the bag.

When a closure is to be adjacent to the bag during microwave use, the closure should be microwave compatible. That is, it should be non-metallic and non-meltable under typical microwave cooking conditions. Metallic and other non-microwave compatible closures can be used with bags adapted for cooking in other than microwave ovens, such as boil-in-bag pouches, or with bags adapted merely for product containment and storage.

If the closure is not integral to the neck portion of the bag, the height of the neck portion should be sufficient to allow for ease of handling in opening and closing the exhaust opening to empty, fill or provide venting of the package. A neck height of at least about 4 inches (10.16 cm) is practical and about 6 inches (15.24 cm) is preferred. A neck portion of a height of less than 4 inches (10.16 cm) will not tie or closely adequately and a height of greater than 6 inches (15.24 cm) is unnecessary and may result in the neck portion falling or folding over due to its own weight. Closing the neck portion as close to the two wing-shaped pouch portions as possible provides the neck with the best upright stability when a tie strap or similar type closure is utilized.

The bag of the invention may also be provided without any reclosable closure means. For example, a portion of the neck portion of the bag may be torn or cut away as a means of providing an exhaust opening to allow venting of vapours during cooking. Bags adapted for non-cooking uses may be provided without any closure means whatsoever.

**Claims**

1. A process for forming a flexible thermoplastic film bag (10) having a base portion and a central neck portion (18) extending upwardly from the base portion, the neck portion (18) having an internal channel (25) in open communication with the base portion and providing access to the base portion when the bag is opened, the base portion comprising a pair of opposed wing sections (12, 14) and the neck portion (18) being smaller than each of the wing sections, the bag walls being formed from an inner skin (38) and an outer skin (34), the outer skin (34) having a higher heat-softening temperature, the process being characterised by the steps of providing thermoplastic film material for the bag having inner (38) and outer (34) skins of different heat-softening temperature responses, selecting the inner skin (38) so as to have a significantly lower heat-softening temperature than the outer skin (34), laying two plies of the film against one another so that inner skin (38) abuts against itself and forms opposite sides and a bottom, gusseting the bottom of the film to the extent that the gussetted bottom forms the major portion of the bag (10), applying heat along the opposite margins of the sides at a temperature above the softening temperature of the inner skin (38) but below that of the outer skin (34), whereby sealing of the inner skin (38) along the margins occurs without sealing of the adjoining outer skin (34) along the gussetted bottom of the bag (10), forming wing sections (12, 14) from the gussetted bottom immediately adjacent and below the neck portion with the opposed wing sections (12, 14) being joined at their margins only where they join the base of the neck portion (18) so that the bottom of the bag formed by the opposed wing sections (12, 14) lies essentially flat when in use and the non-gussetted section forms a central neck portion (18) in open communication with the wing sections (12, 14).

2. A process as claimed in Claim 1 wherein the inner skin (38) is formed from a high or low density polyethylene resin having a melt temperature of from 107°C to 137°C.

3. A process as claimed in Claim 2 wherein the polyethylene has a density of at least 0.95 g/cm³.

4. A process as claimed in any one of the preceding claims wherein the outer skin (34) is formed from a nylon or a polyester resin.

5. A process as claimed in any one of the preceding claims wherein the bag (10) formed has a neck portion (18) whose height is less than one-half the width of one of the wing sections (12, 14) from the juncture with the neck portion (18) to the edge of the wing section (12 or 14).

6. A process as claimed in any one of the preceding claims wherein a closure means (26) is formed on the neck portion (18) from the inner skin (38), the closure means (26) being adapted to automatically open to permit venting when a food product (27) within the bag (10) is heated and the vapour pressure within the bag (10) increases.

7. A process as claimed in any one of Claims 1 to 5 wherein a closure means (26) is formed on the neck portion (18) by coextruding it onto the material forming the neck portion (18), the closure means (26) being adapted to automatically open to permit venting when a food product (27) within the bag (10) is heated and the vapour pressure within the bag (10) increases.

8. A process as claimed in Claim 6 or Claim 7 wherein the closure means (26) is formed of material heat softenable at cooking temperatures to aid in opening the closure means (26) to permit venting.

9. A process as claimed in any one of the preceding claims wherein the bag (10) is made of microwave compatible materials.

10. A bag whenever prepared by a process as claimed in any one of Claims 1 to 9.

11. A food package comprising a bag (10) as claimed in claim 10 having a food product (27) contained therein.

**Patentansprüche**

1. Verfahren zum Formen eines flexiblen thermoplastischen Folienbeutels (10) mit einem Grundteil und einem zentralen Halsteil (18), das sich vom Grundteil nach oben erstreckt, wobei das Halsteil (18) einen in offener Verbindung mit dem Grundteil stehenden Innenkanal (25) aufweist, der beim Öffnen des Beutels einen Zugang zum Grundteil ergibt,

wobei das Grundteil ein Paar gegenüberliegender Flügelteile (12, 14) aufweist und das Halsteil (18) kleiner als jedes der Flügelteile ist,

wobei die Beutelwände aus einer Innenhaut (38) und einer Außenhaut (34) gebildet werden und die Außenhaut (34) eine höhere Wärme-Erweichungstemperatur aufweist,

gekennzeichnet durch die Schritte Vorsehen thermoplastischen Folienmaterials für die Innenhaut (38) und die Außenhaut (34) des Beutels mit unterschiedlichem Wärme-Erweichungstemperaturverhalten,

Auswählen der Innenhaut (38) derart, daß sie eine bedeutend niedrigere Wärme-Erweichungstemperatur aufweist, als die Außenhaut,

Aufeinanderlegen von zwei Folienschichten derart, daß die Innenhaut (38) aneinanderstößt und einander gegenüberliegende Seiten und einen Boden bildet,

Falten des Bodens der Folie in dem Ausmaß, daß der gefaltete Boden den Hauptteil des Beutels (10) bildet,

Aufbringen von Wärme entlang der gegenüberliegenden Ränder der Seiten mit einer Temperatur über der Erweichungstemperatur der Innenhaut (38), jedoch unterhalb der der Außenhaut (34), so daß die Innenhaut (38) entlang der Ränder versiegelt wird, ohne Versiegeln der benachbarten Außenhaut (34) entlang des gefalteten Bodens des Beutels (10),

Ausbilden der Flügelteile (12, 14) aus dem gefalteten Boden unmittelbar benachbart und unterhalb des Halsteils mit den gegenüberliegenden Flügelteilen (12, 14), die nur an ihren Kanten, wo sie die Basis des Halsteils (18) berühren, miteinander verbunden sind, so daß der durch die gegenüberliegenden Flügelteile (12, 14) gebildete Boden des Beutels bei Gebrauch im wesentlichen flach liegt und die nicht gefalteten Teile ein zentrales Halsteil (18) bilden, das in offener Verbindung mit den Flügelteilen (12, 14) steht.

2. Verfahren nach Anspruch 1, dadurch gekennzeichnet, daß die Innenhaut (38) aus einem LD-Polyethylenharz oder einem HD-Polyethylenharz mit einer Schmelztemperatur von 107°C bis 137°C ist.

3. Verfahren nach Anspruch 2, dadurch gekennzeichnet, daß das Polyethylen eine Dichte von mindestens 0,95 g/cm$^3$ aufweist.

4. Verfahren nach jedem der vorstehenden Ansprüche, dadurch gekennzeichnet, daß die Außenhaut (34) aus einem Nylon oder Polyesterharz ist.

5. Verfahren nach jedem der vorstehenden Ansprüche, dadurch gekennzeichnet, daß der gebildete Beutel (10) ein Halsteil (18) aufweist, dessen Höhe kleiner ist als die Hälfte der Breite einer der beiden Flügelteile (12, 14) von der Naht zwischen dem Halsteil (18) und der Kante der Flügelteile (12, 14).

6. Verfahren nach jedem der vorstehenden Ansprüche, dadurch gekennzeichnet, daß Verschließeinrichtungen (26) am Halsteil (18) an der Innenhaut (38) ausgebildet sind, wobei die Verschließeinrichtungen (26) so angepaßt sind, daß sie sich automatisch öffnen und Lüften erlauben, wenn das Nahrungsmittel (27) im Beutel (10) erwärmt wird und der Dampfdruck im Beutel (10) ansteigt.

7. Verfahren nach jedem der Ansprüche 1 bis 5, dadurch gekennzeichnet, daß die Verschließeinrichtung (26) am Halsteil (18) durch Koextrudieren auf das das Halsteil (18) bildende Material ausgebildet wird, wobei die Verschließeinrichtung so angepaßt ist, daß sie sich automatisch öffnet und ein Lüften erlaubt, wenn das Nahrungsmittel (27) im Beutel (10) erwärmt wird und der Dampfdruck im Beutel (10) ansteigt.

8. Verfahren nach Ansprüchen 6 oder 7, dadurch gekennzeichnet, daß die Verschließeinrichtungen (26) aus einem bei Kochtemperaturen wärmeerweichenden Material gebildet sind, um das Öffnen der Verschließeinrichtungen (26) zu unterstützen und das Lüften zu erlauben.

9. Verfahren nach jedem der vorherstehenden Ansprüche, dadurch gekennzeichnet, daß der Beutel (10) aus einem mit Mikrowellen verträglichen Material hergestellt ist.

10. Beutel hergestellt nach einem Verfahren nach jedem der Ansprüche 1 bis 9.

11. Nahrungsmittelpackung mit einem Beutel (10) nach Anspruch 10 mit einem darin enthaltenen Nahrungsmittel (27).

## Revendications

1. Procédé pour former un sachet (10) en film thermoplastique souple, comprenant une partie constituant une base et une partie constituant un col central (18) s'étendant vers le haut depuis la partie constituant la base, la partie constituant le col (18) comportant un canal interne (25) en communication ouverte avec la partie constituant la base et permettant l'accès à la partie constituant la base lorsque le sachet est ouvert, la partie constituant la base comprenant une paire de sections opposées constituant les ailes (12, 14) et la partie constituant le col (18) étant plus petite que chacune des sections constituant les ailes, les parois du sachet étant constituées d'une enveloppe interne (38) et d'une enveloppe externe (34), l'enveloppe externe (34) ayant une température de ramollissement thermique plus élevée, ce procédé étant caractérisé par les étapes consistant à prévoir, pour le sachet, une matière en film thermoplastique comprenant des enveloppes interne (38) et externe (34) ayant des températures de ramollissement thermique différentes; à choisir l'enveloppe interne (38) de telle sorte qu'elle présente une température de ramollissement thermique notablement plus basse que celle de l'enveloppe externe (34); à appliquer deux couches du film l'une contre l'autre de façon que l'enveloppe interne (38) se rabatte sur elle-même et forme des côtés opposés et un fond; à replier en soufflet le fond du film, de telle manière que le fond en soufflet constitue la majeure partie du sachet (10); à faire agir de la chaleur le long des bords opposés des côtés, à une température supérieure à la température de ramollissement de l'enveloppe interne (38) mais inférieure à celle de l'enveloppe externe (34) provoquant ainsi le scellement de l'enveloppe interne (38) le long des bords, sans aucun scellement de l'enveloppe externe adjacente (34) le long du fond en soufflet du sachet (10); à former des sections constituant des ailes (12, 14) à partir du fond en soufflet, immédiatement à proximité et au-dessous de la partie constituant le col, les sections constituant les ailes opposées (12, 14) étant reliées l'une à l'autre sur leurs bords uniquement là où elles se raccordent à la base de la partie constituant le col (18), si bien que le fond du sachet formé par les sections constituant les ailes opposées (12, 14) repose sensiblement à plat en cours d'utilisation, et que la partie non repliée en soufflet forme une partie centrale constituant un col (18) en communication libre avec les sections constituant les ailes (12, 14).

2. Procédé selon la revendication 1, dans lequel l'enveloppe interne (38) consiste en une résine de polyéthylène à haute ou à faible densité, présentant une température de fusion comprise entre 107°C et 137°C.

3. Procédé selon la revendication 2, dans lequel le polyéthylène a une densité d'au moins 0,95 g/cm³.

4. Procédé selon l'une des revendications précédentes, dans lequel l'enveloppe externe (34) consiste en un Nylon ou en une résine polyester.

5. Procédé selon l'une des revendications précédentes, dans lequel le sachet formé (10) comporte une partie constituant un col (18) dont la hauteur est inférieure à la moitié de la largeur de l'une des sections constituant des ailes (12, 14), à partir de la jonction avec la partie constituant le col (18) jusqu'à l'arête de la section constituant l'aile (12 ou 14).

6. Procédé selon l'une des revendications précédentes, dans lequel un moyen d'obturation (26) est formé sur la partie constituant le col (18) à partir de l'enveloppe interne (38), le moyen d'obturation (26) étant conçu pour s'ouvrir automatiquement de manière à permettre une purge lorsqu'un produit alimentaire (27) renfermé par le sachet (10) est chauffé et que la pression de vapeur croît à l'intérieur du sachet (10).

7. Procédé selon l'une des revendications 1 à 5, dans lequel un moyen d'obturation (26) est formé sur la partie constituant le col (18) en le co-extrudant sur la matière formant la partie constituant le col (18), le moyen d'obturation (26) étant conçu pour s'ouvrir automatiquement afin de permettre une purge lorsqu'un produit alimentaire (27) renfermé par le sachet (10) est chauffé et que la pression de vapeur croît à l'intérieur de ce sachet (10).

8. Procédé selon la revendication 6 ou la revendication 7, dans lequel le moyen d'obturation (26) consiste en une matière pouvant être ramollie thermiquement à des températures de cuisson afin de favoriser l'ouverture du moyen d'obturation (26), pour permettre une purge.

9. Procédé selon l'une des revendications précédentes, dans lequel le sachet (10) est réalisé en des matières compatibles avec les micro-ondes.

10. Sachet chaque fois qu'il est fabriqué par un procédé tel que revendiqué à l'une des revendications 1 à 9.

11. Emballage alimentaire comprenant un sachet (10) tel que revendiqué à la revendication 10 et renfermant un produit alimentaire (27).

*Fig. 1*

*Fig. 2*

*Fig. 3*

*Fig. 6*

1

Fig. 4

Fig. 5

Fig. 7